# EUROPEAN PATENT APPLICATION

(11) **EP 4 668 241 A1**
(43) Date of publication of application: **24.12.2025**
(21) Application number: 25183757.1
(22) Date of filing: 18.06.2025
(51) Int. Cl.: G07F 17/32, A63F 9/06, A63F 13/69

(54) **SYSTEM AND METHOD TO IMPLEMENT A LOTTERY SECOND CHANCE GAME BASED ON GAME TILES**

(30) Priority: 21.06.2024 US 202418749942
(71) Applicant: Scientific Games, LLC, Alpharetta, GA 30004 (US)
(72) Inventor: Garrison, Scott B., Georgia, 30004 (US)
(74) Representative: Canzler & Bergmeier Patentanwälte Partnerschaft mbB

(57) **Abstract**

A system and method for play of a lottery bonus game provides lottery tickets in a primary lottery game that entitle a player to receive a game tile for use in the bonus game. Different game tiles are generated for the bonus game, each game tile having a different continuous graphic symbol thereon. A generic game board has designated game spaces defined thereon. The player scans a code on the lottery ticket, receives the game tile associated with the lottery ticket, and places each game tile in any one of the game spaces on the game board and at any orientation desired by the player to create a closed-form shape defined by a continuous connection of the graphic symbols between adjacent game tiles on the game board.

## Description

### FIELD OF THE INVENTION

The present invention relates to a second chance or bonus game for ticket-based lottery games, wherein lottery ticket holders in a primary lottery game have the opportunity to win at the second chance game.

### BACKGROUND

Lottery games have become a time honored method of raising revenue for state and federal governments the world over. The success of these games, however, depends on continuous innovations that capture the interests of current players and draw new players to the games.

In one attempt to increase sales, lotteries have adopted second chance games where the consumer can enter codes from losing lottery tickets on lottery internet sites to play instant second chance games (also referred to as "bonus games") or to enter second chance drawings.

As with other consumers, lottery players are becoming more tech savvy, and are interested in conducting various gaming aspects via electronic devices, such as smart phones. The gaming industry is appreciative of this fact and is seeking ways to integrate games (both primary and second-chance or bonus games) and gaming-related functions into the rapidly developing mobile electronic communication age.

The lottery industry is thus continuously seeking new and creative gaming scenarios that provide increased entertainment value to players, entice new players, and expand play of lottery games (including second chance and bonus games) into the smart electronic communication age.

### SUMMARY OF THE INVENTION

Objects and advantages of the invention will be set forth in part in the following description, or may be obvious from the description, or may be learned through practice of the invention.

In particular embodiments, a system and method are provided for play of a lottery bonus or second-chance game (collectively referred to as a bonus game herein) wherein players redeem a lottery ticket in a primary game and receive a physical (i.e., paper) or digital tile piece ("tile") for each ticket. The system and method are not limited by the type of primary game. For example, the lottery tickets may be well-known scratch-off tickets. In another embodiment, the lottery tickets in the primary game may be instant-win or draw tickets for a future game (e.g., Pick-3 or Pick-4 games).

In one embodiment, only losing tickets in the primary game are eligible to receive a tile. Alternatively, winning and losing tickets in the primary game are eligible to receive a tile.

In particular, each lottery ticket in the primary lottery game is provided with a code that entitles a player to receive a respective game tile. The use of bar codes, QR codes, or other types of conventional scannable codes on all types of scratch-off lottery tickets, draw-game tickets, or instant-win game tickets is known for various purposes, including security, inventory management, accountability, and validation/redemption. These existing codes may also be used to link the respective ticket to a tile that is predetermined for the ticket or randomly assigned to the ticket when the player redeems the ticket for receipt of the tile. Alternatively, the lottery tickets in the primary game may have a unique code dedicated for play of the bonus game.

A plurality of different ones of the game tiles are generated for play in the bonus game, for example a field of fifty different game tiles may be generated for each bonus game. Certain tiles may be more common than other tiles, thereby rendering other such tiles harder for the players to acquire.

Each of the different game tiles in the field of tiles has a different continuous graphic symbol thereon with a first end at a first side of the game tile and a second end at the same first side or at a second side of the game tile. For example, the graphic symbols may be straight, curved, straight and curved, or other free-form lines that extend from one side of multi-side game pieces to another side, which may be an adjacent side or an opposite side.

The system and method include supplying a generic game board to the player, the game board having a plurality of designated game spaces defined thereon. Each of the game spaces needs to be connected to at least one other game space. For example, the game board may have a grid of spaces in one embodiment.

It is within the scope and spirit of the invention that the bonus game can be played with "hard" tiles and game boards, such as paper tiles and paper boards that are supplied to the player from a retail location or lottery redemption center where the player is able to present their physical primary game lottery ticket for receipt of a tile and game board.

It is also envisioned that the bonus game can be played in electronic, digital format wherein the player receives digital tiles and game boards that are stored in a player wallet or account. The player can play the bonus game on a computer or mobile smart device These digital tiles and boards may be transferred to player, for example, upon the player scanning (or having scanned) the code on their primary lottery tickets.

Instructions are provided to the player (i.e., printed or displayed on the digital game boards) to place each of the game tiles they receive in any one of the game spaces on the game board and at any orientation desired by the player to create a closed-form shape defined by a continuous connection of the first and second ends of the graphic symbols between adjacent game tiles on the game board. In a particular embodiment, there are no restrictions placed on the closed-form shape, which may be any free-form shape the player is able to form with the tiles they have on hand. In other embodiments, the closed-form shape may be restricted to certain types of shapes (e.g., a geometric shape such as a square, rectangle, triangle, oval, and so forth).

An award is made to the player in the bonus game based on a number of game tiles used to complete the closed-form shape. This award may have a monetary value, or could be merchandise, entry into a drawing, and so forth.

In a particular embodiment, the award in the bonus game may be greater for a greater number of the game tiles used to complete the closed-form shape. Alternately, the award in the bonus game may be greater for a lesser number of game tiles used to complete the closed-form shape.

In certain embodiments, the lines or graphic symbols on the tiles are multi-directional and can be used in any orientation or connection with any other symbol in an adjacent space on the game board. In other embodiments, at least certain ones of the lines or symbols are uni-directional such that the first end of a symbol on a first game tile can only connect with the second end of a symbol of a second game tile.

The game boards may include, for example, one or more wildcard (i.e., "free") spaces that can be used to interconnect any two tiles regardless of the symbols or lines on the tiles. Alternatively, the game boards may include one or more blocked spaces that cannot accept a game tile.

An embodiment is also contemplated wherein the field of game tiles includes one or more wildcard game tiles that can be used in any game space on the game board to connect the graphic symbol of any two game tiles.

### BRIEF DESCRIPTION OF THE DRAWINGS

A full and enabling description of the present invention is provided herein, with reference to particular embodiments depicted in the attached drawings and described below.
Fig. 1 is a diagram illustration of a system and method for conducting aspects of the present invention wherein a player acquires digital tiles for play in a second chance or bonus game;
Fig. 2 illustrates non-limiting examples of tiles used by the player in embodiments of a system and method for play of the second chance game;
Fig. 3 is an example of a game card for use in an embodiment of a system and method for play of the second chance game;
Fig. 4 is an example of a game card with blocked spaces for use in an embodiment of a system and method for play of the second chance game;
Fig. 5 is an example of a game card with wild-card spaces for use in an embodiment of a system and method for play of the second chance game;
Fig. 6 is an example of a completed game card wherein tiles formed a closed figure within the game card; and
Fig. 7 is another example of a completed game card wherein tiles formed a closed figure within the game card.

### DETAILED DESCRIPTION

Reference will now be made in detail to embodiments of the inventive methods and systems, one or more examples of which are illustrated in the drawings. Each embodiment is presented by way of explanation of the invention, and not as a limitation of the invention. For example, features illustrated or described as part of one embodiment may be used with another embodiment to yield still a further embodiment. It is intended that the present invention include these and other modifications and variations as come within the scope and spirit of the invention.

For sake of example only, the following discussion relates to embodiments of the invention drawn to lottery games, including primary games, bonus games, and second chance games sponsored by state or other jurisdictional lottery authorities. It should be appreciated, however, that the system and method are just as applicable to gaming activities linked to any manner of other gaming authority, such as games conducted within a gaming establishment (e.g., a casino) for patrons of such establishment, or electronic games conducted via an electronic network, such as the internet, for authorized players.

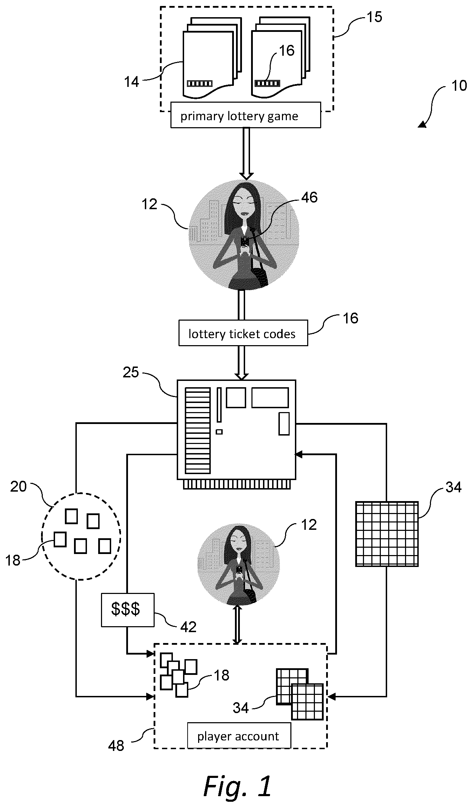

Fig. 1 is a diagram illustration of a system and method 10 in accordance with embodiments of the invention for play of a lottery bonus or second-chance game ("bonus game") wherein players 12 redeem a lottery ticket 14 in a primary game 15 and receive a physical (i.e., paper) or digital tile piece 18 ("tile") for each ticket 14. The system and method 10 are not limited by the type of primary game 15. For example, the lottery tickets 14 may be conventional scratch-off lottery tickets. In another embodiment, the lottery tickets 14 in the primary game may be instant-win or draw tickets for a future game (e.g., Pick-3 or Pick-4 games).

In one embodiment, only losing tickets 14 in the primary game 15 are eligible to receive a tile 18. Alternatively, winning and losing tickets 14 in the primary game 15 are eligible to receive a tile.

Each lottery ticket 14 in the primary lottery game i15 s provided with a code 16 that entitles the player 12 to receive a respective game tile 18. The use of bar codes, QR codes, or other types of conventional scannable codes on all types of scratch-off lottery tickets, draw-game tickets, or instant-win game tickets is known for various purposes, including security, inventory management, accountability, and validation/redemption. These existing codes 16 may also be used to link the respective ticket 14 to a tile 18 when the player 12 redeems the ticket 14 for receipt of the tile 18. Alternatively, the lottery tickets in the primary game may have a unique code 16 thereon dedicated for play of the bonus game.

In a particular embodiment, the game tile 18 that is associated with the lottery ticket 14 is predetermined before the player 12 submits the lottery ticket 14 to a central game server 25 to receive the tile 18. In another embodiment, the central server 25 may randomly select the game tile 18 from a field 20 of different tiles18 when the lottery ticket 14 is presented by the player 12.

As depicted in Fig. 1, a plurality/field 20 of different ones of the game tiles 18 are generated for play in the bonus game, e.g., a field of fifty different game tiles 18 may be generated for each bonus game. The bonus game may be designed so that generally the player has an equal chance or receiving any one of the game tiles 18 in the filed 20 (or, if predetermined, an equal number of each of the game tiles 18 is distributed throughout the run of lottery tickets 14 in the primary game 15). Alternatively, certain tiles 18 may be "rarer" than others, and thus more valuable to the player 12.

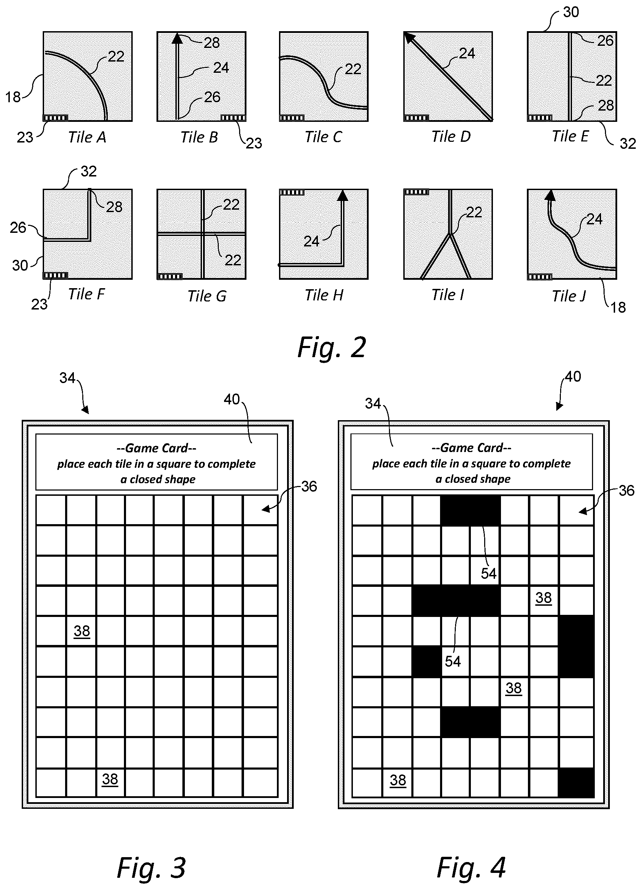

Referring particularly to Fig. 2 with Fig. 1, embodiments of tiles 18 are depicted as Tile A through Tile J. Each of the different game tiles 18 in the field of tiles 20 has a different continuous graphic symbol 22 thereon. Referring to Tiles E and F, each symbol 22 has a first end 26 located at a first side 30 of the game tile 18 and a second end 28 at a second side 32 of the game tile 18. Although the game tiles 18 are depicted as squares or rectangles, it should be appreciated that any multi-sided shape of the tiles 18 is contemplated.

Referring to Fig. 2, the individual graphic symbols 22 may have generally any shape. For example, the graphic symbols 22 may be straight, curved, straight and curved, or other free-form lines/shapes that extend from one side of multi-side game pieces to another side, which may be an adjacent side (Tile F) or an opposite side (Tile E). For more-complex multi-sided game tiles 18, the graphic symbols may have ends 26, 28 at adjacent sides or non-adjacent sides of the game tile 18.

As depicted for Tile G in Fig. 2, one or more of the game tiles 18 may have more than one graphic symbol 22 or a multi-branched graphic symbol 22 (Tile I). With Tile G, for example, the player can use the tile 18 to play any two adjacent sides or any two opposite sides of the tile 18. If a game tile 18 contains more than two end points of the graphic symbols 22 (e.g., Tiles G and I), any two 22 on adjacent, non-adjacent, or opposite sides of the tile 18 can be used to build the closed-form on the game board 34 (discussed below).

In the embodiments of Tiles A and C, for example, the graphic symbols or lines 22 on the tiles 18 are multi-directional and can be used in any orientation or connection with any other symbol 22 in an adjacent space on the game board 34. In other embodiments such as Tiles B, D, H, and J, the lines or symbols 24 are unidirectional such that the first end 26 of a symbol 24 can only connect with the second end 28 of a symbol 24 of a second game tile 18.

Referring to Fig. 2, each game tile 18 may include a code 23 thereon, such as a barcode or QR code, which links the game tile 18 to an electronic record stored or accessible by the central server 25, wherein the record includes the line or graphic symbol 22/24 on the respective game tile 18. These codes 23 may also be used to verify or assign the game tiles 18 to a player account 48 (described in greater detail below).

Referring to Figs. 1 and 3-7, the system and method 10 include supplying a generic game board 34 to the player 12, the game board 34 having a plurality of designated game spaces 38 defined thereon. In the depicted embodiments, the game spaces 38 are arranged in a grid 36. In other embodiments, any pattern of the spaces 38 may be used so long as each game space 38 shares a side with at least two other game spaces 38.

As discussed above, the invention contemplates embodiments wherein the bonus game can be played with "hard" game tiles 18 and game boards 34, such as paper tiles 18 and paper boards 34 that are supplied to the player 12 from a retail location, lottery redemption center, or any other authorized location where the player 12 is able to present their physical primary game lottery ticket 14 for receipt of a tile18 and game board 34.

It the depicted embodiment of the method and system of Fig. 1, the bonus game is played in electronic, digital format wherein upon the player 12 entering the code 16 from a primary game lottery ticket 14 via a website or link maintained by the lottery authority (or authorized third-party) or the player 12 presenting the lottery ticket 14 at a retail establishment for scanning, the central server 25 retrieves a game tile 18 predetermined for the lottery ticket 14 or randomly selects the game tile from the field 20 and transmits the digital game tile 18 to the player's smart device (e.g., mobile phone, tablet, computer, etc.) and also assigns the game tile 18 to the player's electronic account 48. One or more digital game boards 34 is also made available to the player and stored in the player account or wallet 48. At a time of their choosing, the player 12 can access their account, place the saved game tiles 18 in any desired spaces on the digital game board 34, and save the most current arrangement of game tiles 18 on the game board 34. As the player 12 acquires more game tiles 18, the previously placed game tiles 18 can be rearranged on the game board 34 as the player attempts to build and complete the required closed-form.

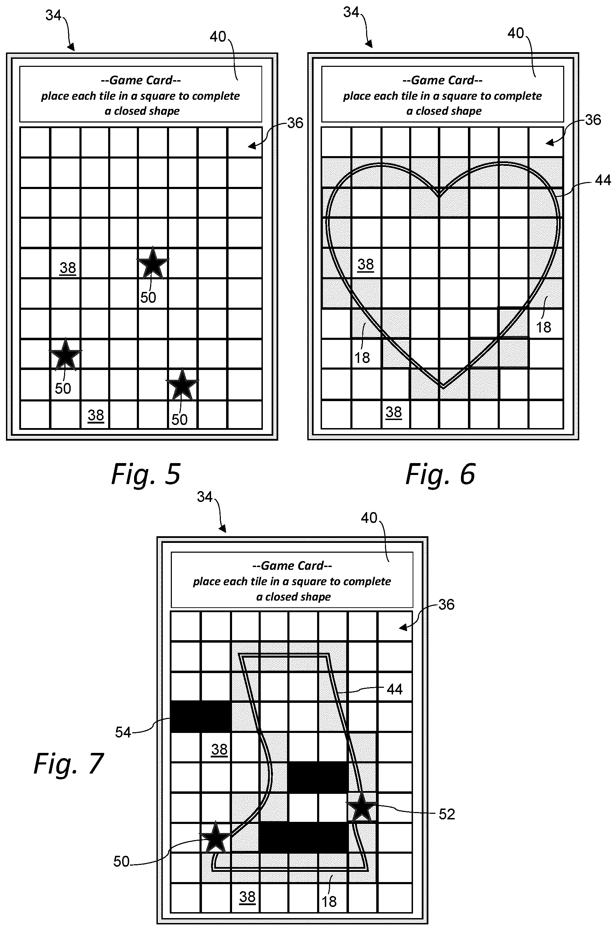

Referring to Fig. 3, instructions 40 are provided to the player 12 at one or more places on the game components. For example, the instructions 40 may be printed or displayed on the digital or hard game boards 34, provide via the game website, and so forth. Referring to Figs. 6 and 7, the instructions 40 inform the player 12 to place each of the game tiles 18 they receive in any one of the game spaces 38 on the game board 34 and at any orientation to create a closed-form shape 44 defined by a continuous connection of the first 26 and second 28 ends of the graphic symbols 22/24 between adjacent game tiles 18 on the game board 34. In a particular embodiment, there are no restrictions placed on the closed-form shape 44, which may be any free-form shape the player is able to form with the tiles 38 in their account. In other embodiments, the closed-form shape 44 may be restricted to certain types of shapes (e.g., a geometric shape such as a square, rectangle, triangle, oval, and so forth).

As depicted in Fig. 5, the game boards 34 may include, for one or more wildcard (i.e., "free") spaces 50 that can be used to interconnect any two tiles 18 regardless of the symbols or lines 22/24 on the tiles 18, as used in the completed free-form closed-loop figure 44 in Fig. 7.

Referring to Fig. 4, in certain embodiments the game boards 34 may include one or more blocked spaces 54 that cannot accept a game tile 18 and, thus are not available for building a closed-loop form 44.

Referring to Fig. 7, an embodiment is also contemplated wherein the field of game tiles18 includes one or more wildcard game tiles 52 that can be used in any game space 38 on the game board 34 to connect the graphic symbol 22/24 of any two game tiles 38.

Once the player 12 completes a closed-loop form 44 on their digital game card 34, the player submits the completed game card 34 from their account 48 to the central server 25 (e.g., via a provided link or website). Using the stored files associated with the code 23 on the game tiles 18, the server 25 verifies that the closed-loop shape on the game card 34 is valid, wherein an award 42 is then made to the player 12 (e.g., credited to the player's account 42 or otherwise made available to the player). This award 42 may have a monetary value, or could be merchandise, entry into a drawing, and so forth. The award 42 may be based on a number of game tiles 18 used to complete the closed-form shape 44. For example, the award 42 may be greater for a greater number of the game tiles 18 used to complete the closed-form shape 44. Alternately, the award 42 in the bonus game may be greater for a lesser number of game tiles 18 used to complete the closed-form shape.

The term "central server" is used herein to encompass any configuration of computer hardware and software that is maintained by a lottery authority or game provider to carry out the functionalities of the present invention, as well as any manner of additional lottery functions. It should be readily appreciated that the server 25 may include an integrated server, or any manner of periphery server or other hardware structure. The game server 25 is typically in communication with a plurality of the retail locations or accessible by smart devices via a suitable secure communication network, which may include any manner of wide area network, wireless internet, or cloud computing.

The game server 25 may be a single networked computer, or a series of interconnected computers having access to the communications network via a gateway or other known networking system. The server 25 may include a memory for storing gaming procedures and routines, a microprocessor (MP) for executing the stored programs, a random access memory (RAM) and an input/output (I/O) bus. These devices may be multiplexed together via a common bus, or may each be directly connected via dedicated communications lines, depending on the needs of the system 10.

The game server 25 may be directly or indirectly connected through the I/O bus to any manner of peripheral devices such as storage devices, wireless adaptors, printers, and the like. In addition, a database (DB) may be communicatively connected to the game server 25 and provide a data repository for the storage and correlation of information gathered from the individual components of the system 10 or may be information relating to individual players, player accounts, games, or game card specific information.

It should be appreciated by those skilled in the art that various modifications and variations may be made present invention without departing from the scope and spirit of the invention. It is intended that the present invention include such modifications and variations as come within the scope of the appended claims.

## Claims

1. A method for play of a lottery bonus game that provides an opportunity for players in a primary lottery game to win an award in the bonus game, the method comprising:
providing lottery tickets in the primary lottery game with a code that entitles a player to receive a game tile for use in play of the bonus game;
wherein a plurality of different ones of the game tiles are generated for play in the bonus game, each the different game tiles having different continuous graphic symbol thereon with a first end at a first side of the game tile and a second end at the first side of the game tile or at a second side of the game tile;
supplying a generic game board to the player, the game board having a plurality of designated game spaces defined thereon;
upon the player scanning the code on the lottery ticket, giving the player the game tile associated with the lottery ticket;
providing instructions to the player to place each of the game tiles they receive in any one of the game spaces on the game board and at any orientation desired by the player to create a closed-form shape defined by a continuous connection of the first and second ends of the graphic symbols between adjacent game tiles on the game board; and
awarding the award in the bonus game to the player based on a number of game tiles used to complete the closed-form shape.

2. The method for play of a lottery bonus game according to claim 1, wherein the bonus game is a digital electronic game played by the player on a computer or mobile smart device, the game board and game tiles supplied to the player in digital form, wherein the player preferably has a personalized digital account with a lottery provider, the game board and game tiles stored in the player digital account.

3. The method for play of a lottery bonus game according to claim 1 or 2, wherein the game board contains a grid of the game spaces.

4. The method for play of a lottery bonus game according to any one of claims 1-3, wherein the graphic symbol on each of the game tiles is one of a straight line or a curved line that extends from the first side to the second side of the game tile.

5. The method for play of a lottery bonus game according to claim 4, wherein:
(1) the straight or curved lines are directional such that the first end of a first game tile can only connect with the second end of a second game tile, or
(2) the straight or curved lines are unidirectional such that the first end of a first game tile can connect with the first or second end of a second game tile.

6. The method for play of a lottery bonus game according to any one of claims 1-5, wherein the game board includes at least one wildcard game space that connects the graphic symbol of any two game tiles at different sides of the wildcard game space, and/or wherein the game board includes at least one blocked game space that is unavailable for placement of a game tile therein.

7. The method for play of a lottery bonus game according to any one of claims 1-6, wherein at least one wildcard game tile is available for possible receipt by the player, wherein the wildcard game tile can be used in any game space on the game board to connect the graphic symbol of any two game tiles.

8. The method for play of a lottery bonus game according to any one of claims 1-7, wherein the game tile assigned to each lottery ticket is randomly selected from the plurality of different ones of the game tiles upon the code on the lottery ticket being scanned.

9. The method for play of a lottery bonus game according to any one of claims 1-8, wherein the game tile assigned to each lottery ticket is predetermined from the plurality of different ones of the game tiles.

10. The method for play of a lottery bonus game according to any one of claims 1-9, wherein:
(1) the award in the bonus game is greater for a greater number of the game tiles used to complete the closed-form shape, or
(2) the award in the bonus game is greater for a lesser number of game tiles used to complete the closed-form shape.

11. A system for play of a lottery bonus game that provides an opportunity for players in a primary lottery game to win an award in the bonus game, the system comprising:
a plurality of lottery tickets in the primary lottery game, each lottery ticket comprising a code that entitles a player to receive a game tile for use in play of the bonus game;
a plurality of game tiles, different ones of the game tiles having a different continuous graphic symbol thereon with a first end at a first side of the game tile and a second end at the first side of the game tile or at a second side of the game tile;
wherein the code on each lottery ticket entitles the player to receipt of one of the game tiles;
a game board made available to the player, the game board having a plurality of designated game spaces defined thereon;
written instructions provided to the player to place each of the game tiles they receive in any one of the game spaces on the game board and at any orientation desired by the player to create a closed-form shape defined by a continuous connection of the first and second ends of the graphic symbols between adjacent game tiles on the game board; and
an award structure, wherein the player receives an award in the bonus game based on a number of the game tiles used to complete the closed-form shape.

12. **The** system according to claim 11, wherein the bonus game is a digital electronic game played by the player on a computer or mobile smart device, the game board and game tiles supplied to the player in digital form, preferably comprising a personalized digital account assigned to the player, the digital game board and digital game tiles stored in the player digital account.

13. **The** system according to claim 11 or 12, wherein the game board comprises a grid of the game spaces.

14. **The** system according to any one of claims 11-13, wherein the graphic symbol on each of the game tiles comprises one of a straight line or a curved line that extends from the first side to the second side of the game tile.

15. **The** system according to any one of claims 11-14, wherein the game board includes at least one wildcard game space that connects the graphic symbol of any two of the game tiles at different sides of the wildcard game space.
